# EUROPÄISCHE PATENTSCHRIFT

(11) **EP 2 639 063 B1**
(45) Veröffentlichungstag und Bekanntmachung des Hinweises auf die Patenterteilung: **14.12.2016**
(21) Anmeldenummer: 12001758.7
(22) Anmeldetag: 15.03.2012
(51) Int. Cl.: B65F 1/00, B29C 55/02, B29D 7/01, C08J 5/18

(54) **Stoffmaterial mit Prägungen**
Material with embossments
Matériau gaufré

(43) Veröffentlichungstag der Anmeldung: 18.09.2013
(73) Patentinhaber: pely-plastic GmbH & Co. KG, 23812 Wahlstedt (DE)
(72) Erfinder: Bark, Andreas, 22397 Hamburg (DE)
(74) Vertreter: Hauck Patentanwaltspartnerschaft mbB

(56) Entgegenhaltungen:
- EP-A1- 0 338 747
- WO-A2-2006/072604
- US-A1- 2009 233 041

## Beschreibung

Die Erfindung bezieht sich auf ein mit Prägungen versehenes Stoffmaterial.

Die EP 0 712 304 B1 beschreibt ein Stoffmaterial, das entlang wenigstens einer Achse ein elastikähnliches Verhalten zeigt. Das Stoffmaterial hat wenigstens einen ersten Bereich und einen zweiten Bereich, die die gleiche Materialzusammensetzung aufweisen. Der erste Bereich ist ungeprägt und der zweite Bereich ist mit Prägungen versehen. Der erste und der zweite Bereich haben im ungespannten Zustand eine bestimmte projizierte Bahnlänge. Wenn das Stoffmaterial im Wesentlichen parallel zu einer Achse gedehnt wird, dann wird der erste Bereich einer im Wesentlichen molekularseitigen Verformung unterzogen und der zweite Bereich anfangs einer im Wesentlichen geometrischen Verformung. Wenn die Dehnung nicht mehr angewandt wird, kehren der erste Bereich und der zweite Bereich im Wesentlichen zu ihrer ungespannt projizierten Bahnlänge zurück.

Die Stoff- bzw. Bahnmaterialien können Polyolefine umfassen, wie Polyethylene, einschließlich linearer Polyethylene mit geringer Dichte (LLDPE), Polyethylene mit geringer Dichte (LDPE), Polyethylene mit ultraniedriger Dichte (ULDPE), Polyethylene mit hoher Dichte (HDPE) oder Polypropylene und Mischungen derselben mit den obigen und anderen Materialien. Beispiele weiterer geeigneter Polymermaterialien, welche verwendet werden können, umfassen, sind aber nicht darauf begrenzt, Polyester, Polyurethane, kompostierbare oder biodegradierbare Polymere, wärmeschrumpfende Polymere, thermoplastische Elastomere, metallorganische, katalysatorgestützte Polymere (z.B. INSITE®, verfügbar von Dow Chemical Company und Exxact®, verfügbar von Exxon) und atmungsfähige Polymere. Das Bahnmaterial kann auch ein synthetisches Gewebe, synthetische Maschenbahn, Vliesmaterial, geöffnete Filme, mikroskopisch expandierte, dreidimensional gebildete Filme, absorbierendes bzw. faserförmiges Absorbiermaterial, Schaum, eine gefüllte Zusammensetzung oder Laminate und/oder Kombinationen davon sein. Die Vliesstoffe können, aber nicht beschränkt darauf, hergestellt sein mit den folgenden Verfahren: Spunlacing, spunbonding, Schmelzblasung, Kardierung und/oder Luft- oder Kalanderbindung, wobei ein Spunlacematerial mit lose gebundenen Fasern die bevorzugte Ausführungsform ist.

Beim Dehnen des bekannten Stoffmaterials werden vor allem die ersten Bereiche belastet. Diese müssen die gesamte Belastung auffangen. Die hohe Belastung der ersten Bereiche kann zum Reißen des Stoffmaterials führen. Ein Reißen des Stoffmaterials kann insbesondere durch punktuelle mechanische Deformation durch spitze Gegenstände, Äste, Knochen, tiefgefrorene Pommes etc. bewirkt werden.

Die EP 0 959 845 B1 beschreibt ein weiches Bahnmaterial aus ersten Regionen und zweiten Regionen, welche die gleiche Materialzusammensetzung aufweisen. Die ersten Regionen erfahren eine molekularmäßige und geometrische Verformung und die zweiten Regionen eine anfänglich im Wesentlichen geometrische Verformung, wenn das Bahnmaterial gedehnt wird. Die ersten Regionen sind ungeprägte Bereiche und die zweiten Regionen mit Prägungen versehene Bereiche des Stoffmaterials. Ein Bereich der ersten Regionen erstreckt sich in einer ersten Richtung, während sich der Rest der ersten Regionen in einer zweiten Richtung erstreckt, die rechtwinklig zur ersten Richtung ist, derart, dass die beiden Bereiche der ersten Regionen einander schneiden. Die ersten Regionen bilden eine Grenze, welche die zweiten Regionen vollständig umgibt. Die zweiten Regionen umfassen eine Mehrzahl paralleler rippenartiger Elemente. Als Materialien für das Stoffmaterial sind dieselben Materialien wie in der EP 0 712 304 B1 angegeben.

Auch bei Belastung dieses Stoffmaterials werden zunächst die ersten Regionen gedehnt und belastet, sodass das Stoffmaterial durch Reißen der ersten Regionen leicht zerstört werden kann.

Ein durch Prägungen verstärktes, reißfestes Stoffmaterial ist außerdem aus der US 2009/0233041 A1 bekannt, jedoch lediglich als Laminat.

Davon ausgehend liegt der Erfindung die Aufgabe zugrunde, ein höher belastbares Stoffmaterial zur Verfügung zu stellen.

Die Aufgabe wird durch ein Stoffmaterial mit den Merkmalen von Anspruch 1 gelöst. Vorteilhafte Ausgestaltungen des Stoffmaterials sind in Unteransprüchen angegeben.

Das erfindungsgemäße Stoffmaterial umfasst eine Folie aus HDPE, die flächendeckend mit die Folie aus HDPE zumindest partiell überdehnenden Prägungen versehen ist.

Das erfindungsgemäße Stoffmaterial ist durch Nutzung eines Verstreckungseffektes verstärkt. Der Verstreckungseffekt beruht auf der zumindest partiellen Überdehnung der Folie aus HDPE (HDPE-Folie) im Bereich der Prägungen. Durch die Überdehnung ist die HDPE-Folie irreversibel gedehnt. Durch diese Überdehnung werden die Kunststoffmoleküle der HDPE-Folie molekular ausgerichtet und der kristalline Anteil erhöht, wodurch die Verstärkung der Materialschicht erreicht wird. Ohne die Prägungen sind im begrenztem Maße Bereiche mit orientierten Molekülen in der HDPE-Folie isotrop verteilt. Die Moleküle sind in Blasfolien bevorzugt in Maschinenlaufsichtung ausgerichtet und aufgrund der Aufweitung des Folienschlauches auch in geringem Umfang quer dazu. Bei Grießfolien ("cast film") sind die Moleküle ausschließlich in Maschinenlaufrichtung orientiert. Durch das Prägen werden die Polymerketten in der HDPE-Folie in Verstreckungsrichtung orientiert. Hierdurch besteht die Möglichkeit, die Orientierung der Moleküle in der HDPE-Folie in einer bestimmten Richtung gezielt zu erzeugen oder zu verstärken. Wesentlich hierfür ist eine Folie aus Polyethylen hoher Dichte (HDPE), weil dieses Kunststoffmaterial höhere kristalline Anteile hat, die durch Verstreckung noch stärker orientiert werden können. Bei anderen Kunststoffmaterialien, wie beispielsweise LLDPE, ist dies nicht im gleichen Umfang möglich, weil die Anteile der kristallinen Bereiche wesentlich geringer sind. Ferner ist wesentlich für den Verstärkungseffekt, dass die Prägungen die gesamte HDPE-Folie einnehmen. Dies ist der Fall, wenn sich die Prägungen in mindestens einer Richtung ohne Unterbrechung in der HDPE-Folie erstrecken. Dies ist gegeben, wenn Prägung neben Prägung angeordnet ist, ohne einen Abstandsbereich dazwischen. Bevorzugt erstrecken sich die Prägungen in mehreren Richtungen ohne Unterbrechung in der HDPE-Folie. Vorzugsweise ist die HDPE-Folie mit einem ununterbrochenen Netz von Prägungen versehen. Dadurch, dass die Prägungen die gesamte HDPE-Folie einnehmen, wird erreicht, dass die Belastungen der Materialschicht vollständig von den durch Prägungen verstärkten Bereichen aufgenommen werden. Der Kraftfluss kann die Prägungen nicht entlang ungeprägter Bereiche umgehen, die aufgrund mangelnder Verfestigung bei einer Konzentration der Belastung auf diese Bereiche leicht einreißen, wie im eingangs angeführten Stand der Technik.

Das Stoffmaterial weist zweidimensionale und/oder dreidimensionale Prägungen auf. Unter zweidimensionalen Prägungen werden Prägungen verstanden, die mittels eines Prägewerkzeuges erzeugt werden, das für jede Prägung mittels einer Prägestruktur erzeugt, die nur eine Flanke aufweist. Unter dreidimensionalen Prägungen werden Prägungen verstanden, die mittels eines Prägewerkzeuges erzeugt werden, das jede Prägung mit einer Prägestruktur erzeugt, die zwei Flanken aufweist.

Je nach Form der Prägungen können unterschiedliche Verstärkungen in verschiedenen Richtungen des Stoffmaterials erreicht werden.

Gemäß einer weiteren Ausgestaltung sind die Prägungen wabenförmig oder dreiecksförmig oder linienförmig.

Gemäß einer weiteren Ausgestaltung hat die HDPE-Folie überall gleichförmige Prägungen. Gemäß einer anderen Ausgestaltung ist die HDPE-Folie flächendeckend mit Prägungen versehen, die zumindest zum Teil verschiedene Formen aufweisen.

Das erfindungsgemäße Stoffmaterial besteht ausschließlich aus einer HDPE-Folie.

Gemäß einer Ausgestaltung kompensieren die Prägungen ganz oder teilweise unterschiedliche Festigkeiten des ungeprägten Ausgangsmaterials in Längs- und Querrichtung, sodass das mit den Prägungen versehene Stoffmaterial in Längs- und Querrichtung gleichmäßigere Festigkeiten als das ungeprägte Ausgangsmaterial aufweist. Beispielsweise sind herkömmliche Blasfolien oder Gießfolien in Maschinenlaufrichtung leicht spleißbar. Durch Prägungen, die ausschließlich oder überwiegend senkrecht zur Maschinenlaufrichtung erstreckt sind, ist dies ganz oder teilweise kompensierbar.

Gemäß einer weiteren Ausgestaltung weist das ungeprägte Ausgangsmaterial der HDPE-Folie eine Materialstärke von 5 bis 16 µm auf. Die Erfindung hat den zusätzlichen überraschenden Vorteil, dass das Stoffmaterial den Griff eines dickeren ungeprägten Stoffmaterials hat, als das ungeprägte Ausgangsmaterial, aus dem das Stoffmaterial hergestellt ist. So fühlt sich beispielsweise ein Stoffmaterial, das aus einer ungeprägten HDPE-Folie mit einer Materialstärke von etwa 12 µm hergestellt ist, wie eine ungeprägte HDPE-Folie mit einer Materialstärke von 24 µm an. Der Anwender ist deshalb geneigt, das geprägte Stoffmaterial höher zu belasten, als das ungeprägte Ausgangsmaterial, beispielsweise wenn das Stoffmaterial mit einem Kunststoff zu einem Beutel verarbeitet ist. Dies ist gewollt, weil das Stoffmaterial aufgrund der Prägungen verstärkt ist und in der Lage ist, hohen Belastungen standzuhalten. Das Stoffmaterial wird so besser ausgenutzt.

Ferner bezieht sich die Erfindung auf einen Beutel, der ganz oder teilweise aus einem der vorbeschriebenen erfindungsgemäßen Stoffmaterialien hergestellt ist. Beispielsweise ist der gesamte Beutelkörper des Beutels oder nur ein Beutelboden des Beutelkörpers aus dem Stoffmaterial hergestellt. Die Reißfestigkeit und der Griff des Beutelkörpers sind hierdurch verbessert.

Gemäß einer Ausgestaltung ist der Beutel ein Müllbeutel oder ein Kleiderbeutel oder ein Biomüllbeutel oder ein Schwerlastbeutel. Die Erfindung ist insbesondere für Beutel vorteilhaft, die hohen Belastungen unterworfen sind.

Gemäß einer weiteren Ausgestaltung ist der Beutel ein Zugbandbeutel. Beispielsweise ist der Beutelkörper des Zugbandbeutels ganz oder teilweise aus dem erfindungsgemäßen Stoffmaterial eingestellt und/oder ist das Zugband des Zugbandbeutels ganz oder teilweise aus dem erfindungsgemäßen Stoffmaterial hergestellt. Vorzugsweise sind der Beutelkörper und/oder das Zugband ganz aus dem erfindungsgemäßen Stoffmaterial hergestellt. Die Reißfestigkeit, der Griff und der Reibbeiwert eines Zugbands, das ganz oder teilweise aus dem erfindungsgemäßen Stoffmaterial besteht, sind verbessert.

Die Erfindung wird nachfolgend anhand der anliegenden Zeichnungen von Ausführungsbeispielen näher erläutert. In den Zeichnungen zeigen:
- Fig. 1: kristalline und amorphe Bereiche in einem teilkristallinen HDPE-Polymer in grobschematischer Darstellung;
- Fig. 2: orientierte Bereiche in einem teilkristallinen HDPE in einer grobschematischen Darstellung;
- Fig. 3: Prägewerkzeuge in einem grobschematischen Vertikalschnitt;
- Fig. 4a+b: Stoffmaterial mit wabenförmigen Prägungen in einer Draufsicht (Fig. 4a) und ein zwei Prägungen zugeordnetes Prägewerkzeug in einer Draufsicht auf die Prägungen und in einem Vertikalschnitt durch das Werkzeug (Fig. 4b);
- Fig. 5: Stoffmaterial mit dreiecksförmigen Prägungen in einer Draufsicht,
- Fig. 6: einen Zugbandbeutel mit netzartigen Prägungen in der Draufsicht.

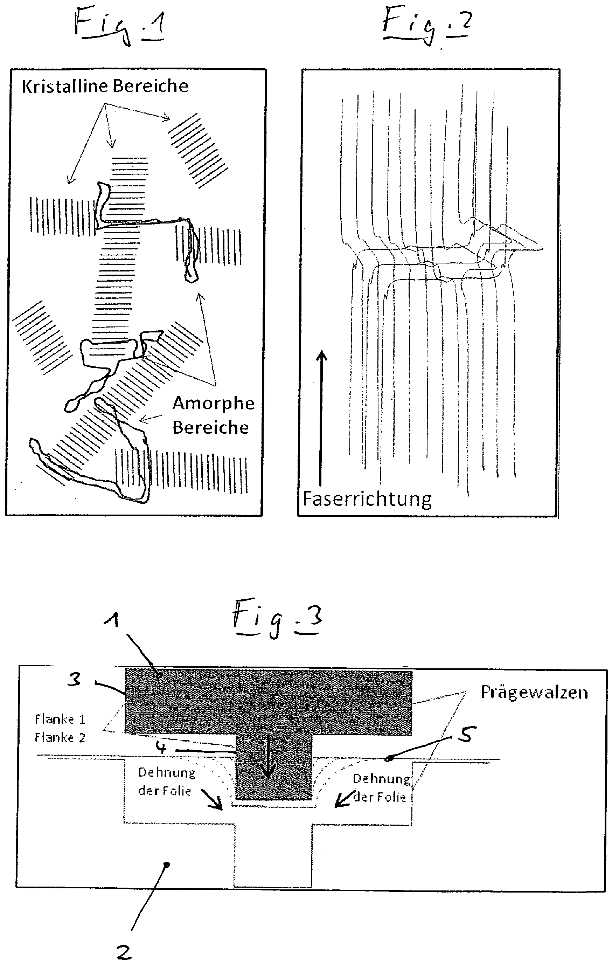

Gemäß Fig. 1 sind in einer Folie aus HDPE die Kunststoffmoleküle in kristallinen und amorphen Bereichen angeordnet. Die HDPE-Folie hat somit eine teilkristalline Orientierung der Polyethylen-Fasern.

Gemäß Fig. 2 sind die Fasern durch Verstreckung bzw. Reckung orientiert. Dabei ist deutlich zu sehen, dass aus einem nachgiebigen Polymerknäuell ein Strang steifer Fäden wird. Diese Orientierung der Polyethylen-Fasern, die durch Prägen erzeugt wird, bewirkt eine erhöhte Festigkeit der HDPE-Folie.

Gemäß Fig. 3 wird zur Prägung ein Prägewerkzeug 1 herangezogen, das mit einer Matrize 2 zusammenwirkt. Das Prägewerkzeug 1 hat eine erste Flanke 3 und eine zweite Flanke 4. Die Matrize 2 ist komplementär geformt. Zwischen Prägewerkzeug 1 und Matrize 2 wird eine Materialschicht in Form einer Folie 5 eingebracht. Durch Eindrücken des Prägewerkzeugs 1 in die Matrize 2 wird die HDPE-Folie 5 gereckt und hierdurch verstärkt. Wegen der beiden Flanken 3, 4 des Werkzeugs 1 wird die HDPE-Folie 5 zweifach gereckt und erhält im Sinne dieser Anmeldung eine dreidimensionale Struktur.

Für eine kontinuierliche Produktion ist das Prägewerkzeug 1 bevorzugt eine Prägewalze und mit einer Vielzahl von Strukturen gemäß Fig. 3 auf der äußeren Oberfläche ausgebildet. Die Prägewalze arbeitet synchron mit einer Gegenwalze zusammen, die auf der Oberfläche eine Vielzahl von Strukturen gemäß der Matrize 2 von Fig. 3 aufweist.

Alternativ kann die Prägung auch nur zweidimensional vorgenommen werden mit einem Prägewerkzeug 1, das nur eine Flanke 3 aufweist und mit einer Matrize 2, die dementsprechend ebenfalls nur mit einer Flanke versehen ist.

Bei der zweidimensionalen Prägung wird die Folie 5 aus HDPE bereits verstreckt und verstärkt. Bei der dreidimensionalen Prägung ist die Verstreckung stärker und wird dementsprechend die Festigkeit der HDPE-Folie 5 noch weiter erhöht.

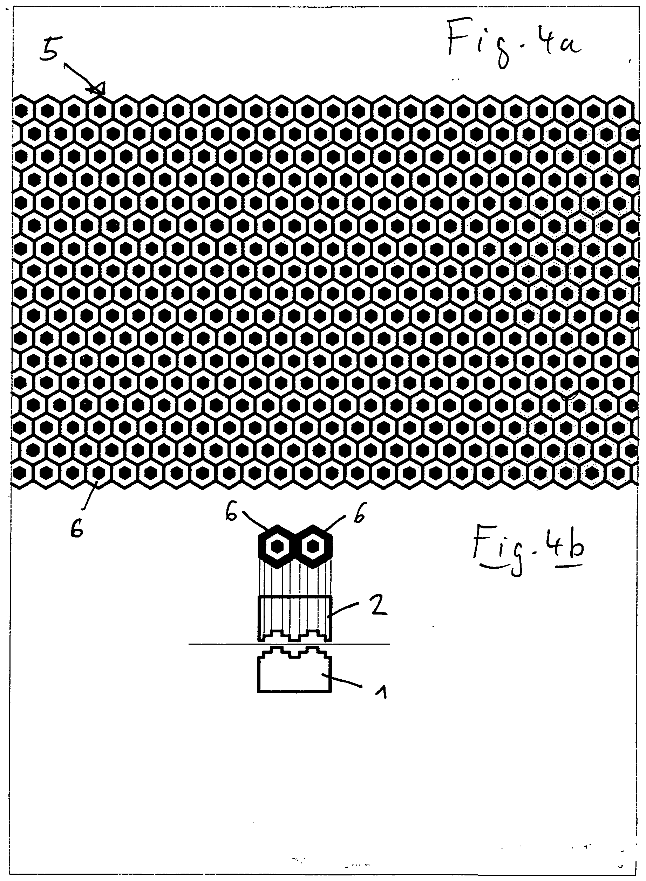

Gemäß Fig. 4a sind in eine Materialschicht 5 aus einer Folie aus HDPE eine Vielzahl wabenförmiger Prägungen 6 flächendeckend eingebracht. Die Prägungen 6 werden mittels eines dreidimensionalen Werkzeugs 1 mit zugehöriger Matrize 2 erzeugt, von dem ein Abschnitt in Fig. 4b gezeigt ist.

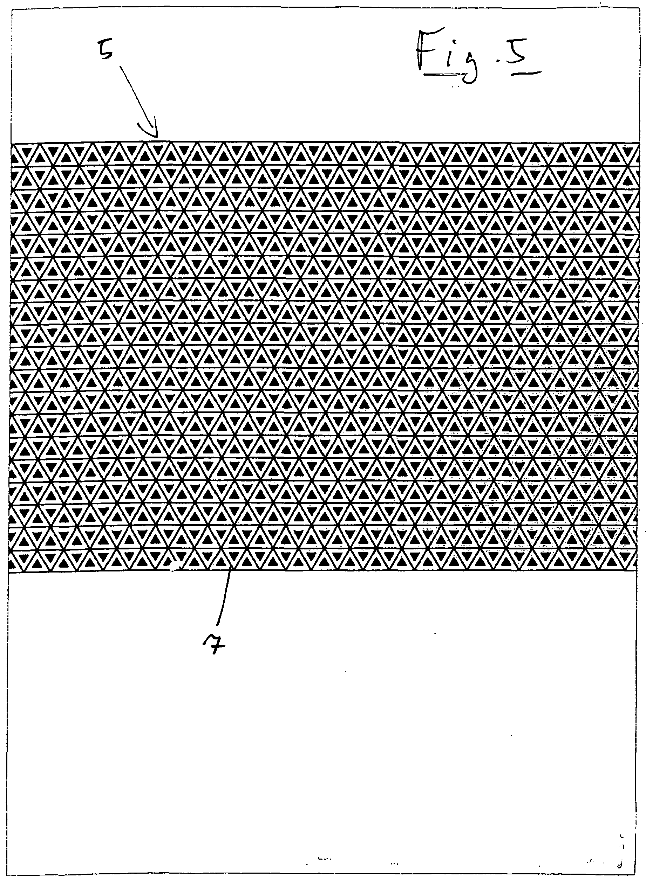

Gemäß Fig. 5 weist eine Materialschicht 5 aus einer Folie aus HDPE flächendeckend dreiecksförmige Prägungen 7 auf. Die Prägungen 7 sind auch in diesem Falle dreidimensional ausgebildet.

Bei herkömmlichen Folien aus HDPE, die im Blasformprozess gefertigt werden, ist die Festigkeit in Längsrichtung tendenziell höher als in Querrichtung. Um ausgewogene Folieneigenschaften zu erreichen, kann das Aufblasverhältnis erhöht werden. Bei Folien aus HDPE gelingt dies nur bedingt, sodass versucht wird, besonders bei dünnen HDPE-Folien durch die sogenannte "Langhalsfahrweise" dem entgegenzuwirken. Zusätzlich kann durch die erfindungsgemäße Einbringung von Prägungen in HDPE-Blasfolien eine gleichmäßigere Festigkeit in verschiedenen Richtungen erreicht werden. Einem unerwünschten Spleißen der Folien in der Anwendung beim Endverbraucher kann hierdurch entgegengewirkt werden. Entsprechendes gilt für HDPE-Gießfolien, bei denen originär die Polymerketten nur Maschinenlaufrichtung ausgerichtet sind.

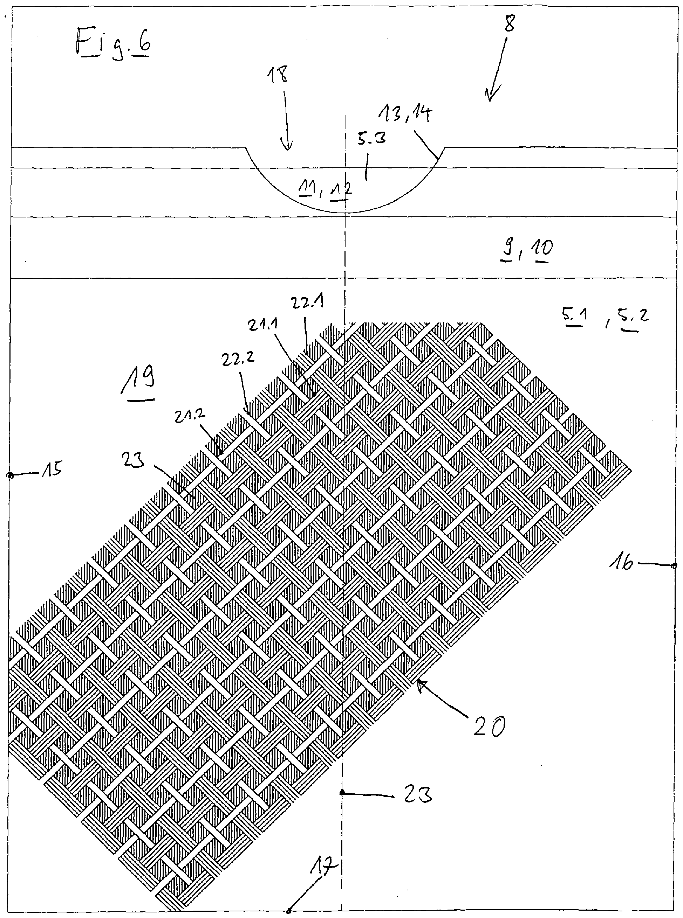

Gemäß Fig. 6 umfasst im Zugbandbeutel 8 zwei Folien 5.1, 5.2 jeweils aus HDPE. Der obere Rand jeder HDPE-Folie 5.1, 5.2 ist zu einem Saum 9, 10 umgelegt, in dem jeweils ein Zugband 11, 12 angeordnet ist, das durch eine Eingriffsöffnung 13, 14 in der Mitte jedes Saumes 9, 10 von außen zugänglich sind. Die Folien 5.1, 5.2 sind an den seitlichen Rändern durch seitliche Schweißnähte 15, 16 miteinander verbunden. Diese verbinden auch die Schichten des Saumes 9. 10 und die Zugbänder 11, 12 an den seitlichen Rändern miteinander. Am unteren Rand sind die Folien 5.1, 5.2 durch eine untere Schweißnaht 17 miteinander verbunden. Zwischen den Säumen 9, 10 ist am oberen Rand eine Beutelöffnung 18 vorhanden. Die miteinander verbundenen Folien 5.1, 5.2 bilden einen Beutelkörper 19, der in seinen Säumen 9, 10 Zugbänder 11, 12 enthält.

Jede Folie ist mit einem Netz 20 aus linienförmigen Prägungen 21, 22 versehen, die jeweils um 45° zur Hochachse 23 des Zugbandbeutels 8 ausgerichtet sind, die der Maschinenlaufrichtung entspricht. Das Netz 20 umfasst Gruppen von je vier Prägungen 21.1, 22.1, die senkrecht zueinander ausgerichtet sind. Die Prägelinien 21.1 sind von den Prägelinien 22.1 geschnitten. Ferner umfasst das Netz 20 Gruppen von je zwei Prägelinien 21.2, 22.2, die senkrecht zueinander ausgerichtet sind, wobei die Prägelinien 21.1 und 21.2 zueinander parallel und die Prägelinien 22.1 und 22.2 zueinander parallel sind. Die Prägelinien 21.1 sind von den Prägelinien 22.2 geschnitten, die Prägelinien 22.1 sind von den Prägelinien 21.2 geschnitten und die Prägelinien 22.2 sind von den Prägelinien 21.1 geschnitten. An den Schnittstellen sind die verschiedenen Prägelinien 21.1, 22.1, 21.2, 22.2 miteinander verbunden, so dass die Prägelinien insgesamt ununterbrochen durch die Folien hindurch verlaufen. Zusätzlich sind in Rauten, die von Prägelinien 21.1, 22.1, 21.2, 22.2 begrenzt sind, weitere zueinander parallele Prägelinien 23 vorhanden, die in Maschinenlaufrichtung ausgerichtet sind.

Die Zugbänder 11, 12 sind vorzugsweise aus HDPE-Folie 5.3 hergestellt und entsprechend mit Prägungen versehen wie die Folien 5.1, 5.2. Der Zugbandbeutel 8 ist beispielsweise ein Müllbeutel.

## Patentansprüche

1. Stoffmaterial umfassend eine Folie (5) aus HDPE, die flächendeckend mit die Folie (5) überdehnenden zwei- oder dreidimensionalen Prägungen versehen ist, **dadurch gekennzeichnet, dass** das Stoffmaterial ausschließlich aus einer Folie aus HDPE besteht und die Prägungen die gesamte HDPE-Folie (5) einnehmen, wobei die Prägungen in mindestens einer Richtung ohne Unterbrechung in der HDPE-Folie sich erstrecken mit Prägung neben Prägung ohne Abstandsbereich dazwischen, sodass der Kraftfluss die Prägungen entlang ungeprägter Bereiche nicht umgehen kann.

2. Stoffmaterial nach Anspruch 1, bei dem die Prägungen (6, 7) wabenförmig oder dreiecksförmig oder linienförmig sind.

3. Stoffmaterial nach einem der Ansprüche 1 bis 2 , bei dem die Prägungen (6, 7) unterschiedliche Festigkeiten des ungeprägten Ausgangsmaterials in Längs- und Querrichtung kompensieren, sodass die mit Prägungen versehene Folie (5) aus HDPE in Längs- und Querrichtung gleichmäßigere Festigkeiten als das ungeprägte Ausgangsmaterial aufweist.

4. Stoffmaterial nach einem der Ansprüche 1 bis 3, bei dem das ungeprägte Ausgangsmaterial eine HDPE-Folie ist, die eine Materialstärke von 5 bis 16 µm aufweist.

5. Beutel ganz oder teilweise hergestellt aus einem Stoffmaterial gemäß einem der Ansprüche 1 bis 4.

6. Beutel nach Anspruch 5 , der ein Müllbeutel oder ein Kleiderbeutel oder ein Biomüllbeutel oder ein Schwerlastbeutel ist.

## Claims

1. A material comprising a film (5) made of HDPE, which is provided over a large area with two- or three-dimensional embossments overstretching the film (1), **characterized in that** the material consists exclusively of a film made of HDPE and the embossments take the entire HDPE film (5), wherein the embossments extend in at least one direction without interruption in the HDPE film with embossment next to embossment without a gap in between, so that the force flow cannot go around the embossments along un-embossed areas.

2. The material according to claim 1, in which the embossments (6, 7) are alveolar or triangular or linear.

3. The material according to one of claims 1 to 2, in which the embossments (6, 7) compensate for different strengths of the un-embossed source material in the longitudinal and transverse direction so that the film (5) made of HDPE provided with embossments has more even strengths than the un-embossed source material.

4. The material according to one of claims 1 to 3, in which the un-embossed source material is an HDPE film, which has a material thickness of 5 to 16 µm.

5. A bag made entirely or partially of a material according to one of claims 1 to 4.

6. The bag according to claim 5, which is a garbage bag or a clothes bag or an organic waste bag or a heavy-duty bag.

## Revendications

1. Matériau de tissu comprenant une feuille (5) en HDPE dotée sur toute sa surface de gaufrages bidimensionnels ou tridimensionnels distendant la feuille (5), **caractérisé en ce que** le matériau de tissu se compose exclusivement d'une feuille en HDPE et les gaufrages couvrent toute la feuille en HDPE (5), les gaufrages s'étendant dans au moins une direction sans interruption dans la feuille en HDPE, gaufrage côtoyant gaufrage sans zone d'écartement entre eux, de manière à ce que le flux de force ne puisse pas contourner les gaufrages le long des zones non gaufrées.

2. Matériau de tissu selon la revendication 1, dans lequel les gaufrages (6, 7) sont en forme d'alvéole ou triangulaires ou linéaires.

3. Matériau de tissu selon l'une quelconque des revendications 1 à 2, dans lequel les gaufrages (6, 7) compensent dans les sens longitudinal et transversal des stabilités différentes du matériau de départ non gaufré, de manière à ce que la feuille gaufrée (5) en HDPE présente dans les sens longitudinal et transversal des stabilités plus uniformes que le matériau de départ non gaufré.

4. Matériau de tissu selon l'une quelconque des revendications 1 à 3, dans lequel le matériau de départ non gaufré est une feuille en HDPE présentant une épaisseur de matériau de 5 à 16 µm.

5. Sac fabriqué entièrement ou partiellement en un matériau de tissu selon l'une quelconque des revendications 1 à 4.

6. Sac selon la revendication 5, qui est un sac poubelle ou un sac à linge ou un sac à déchets biodégradables ou un sac à charges lourdes.
